Europäisches Patentamt

European Patent Office

Office européen des brevets

(19)

(11) EP 1 367 779 A1

(12) EUROPEAN PATENT APPLICATION

(43) Date of publication:
03.12.2003 Bulletin 2003/49

(51) Int Cl.⁷: $H04L\ 12/56$, $H04L\ 12/24$, $H04Q\ 3/00$

(21) Application number: 02077180.4

(22) Date of filing: 31.05.2002

(84) Designated Contracting States:
AT BE CH CY DE DK ES FI FR GB GR IE IT LI LU
MC NL PT SE TR
Designated Extension States:
AL LT LV MK RO SI

(71) Applicant: UNIVERSITEIT TWENTE
NL-7500 AE Enschede-Drienerlo (NL)

(72) Inventors:
• Nicola, Victor Fouad
7522 PB Enschede (NL)

• Karagiannis, Giorgios
7161 PJ Neede (NL)

(74) Representative: 't Jong, Bastiaan Jacob et al
Arnold & Siedsma,
Advocaten en Octrooigemachtigden,
Sweelinckplein 1
2517 GK Den Haag (NL)

(54) **Robust congestion control mechanisms for communication networks**

(57) The invention relates to a method for controlling traffic on a network, wherein the traffic comprises a plurality of service requests from a plurality of sources of different types to a service control point, and wherein the network comprises a service switching point for restricting the number of requests, which method comprises the steps of:

- measuring the overall utilization of the service control point;
- measuring the utilization of the service control point due to each individual source connected to a service switching point (source-utilization); the sum of which is the overall utilization of the service control point;
- measuring the utilization of the service control point due to all sources of the same type (source-type-utilization); the sum of which is the overall utilization of the service control point;
- as long as the overall utilization predetermined bound of the service control point is not exceeded, each individual source may sent as many service requests as it wishes;
- on exceeding a predetermined overall utilization bound of the service control point, service requests are restricted from individual sources (or from sources of the same type) whose utilization bound is exceeded.

## EP 1 367 779 A1

**Description**

The invention relates to a method for controlling congestion of traffic on a network, wherein the traffic comprises a plurality of service requests from a plurality of sources of different types to a service control point and wherein the network comprises a service switching point for restricting the number of requests.

Telecommunication networks are increasingly used for different types of services. A telecommunications network, such as cellular phone network is used for voice transmission, data transmission for connecting laptops, SMS transmission, internet services and so on.

A telecommunications network such as a computer network is used for web pages, file transmission, video transmission, phone calls and so on.

However, if the number of service requests to be processed by a centralized control entity increases beyond a certain limit, then this centralized control entity could become overloaded. This would introduce a severe performance degradation, which is experienced by users of the telecommunications network by high delays or a high percentage of refusals.

In order to avoid overloading of a centralized control entity, congestion control mechanisms are used. The disadvantage of such control mechanisms is that is might decrease the user's satisfaction of using such a telecommunication network as the user may experience a higher percentage of request refusals. This is solved by a load balancing mechanism, which redirects refused service requests to a neighbouring centralized control entity.

A known congestion control mechanism is the automatic call gapping mechanism. The main idea of this algorithm is to reduce the call attempt rate (i.e., the number of call attempts sent from the service switching point to the service control point in a given time interval) by allowing only one call attempt per gap interval (g). This reduction only takes place when the mechanism has been activated due to congestion and lasts for a gap duration (D).
If the service control point tends to get overloaded the automatic call gapping mechanism is activated by starting a gap duration timer at the service switching point.
This timer measures the gap duration and it stops when the measured time is equal to the predefined gap duration value D. When the first call attempt arrives at the service switching point it is sent to the service control point, and simultaneously a gap interval timer is started. This timer measures the gap interval and it stops when the measured time is equal to the predefined gap interval value g. The incoming call attempts that arrive while the gap interval timer is less than g will not be passed to the service control point. When the gap interval timer equals g the service switching point waits until the next call attempt arrives, which is passed to the service control point and a new gap interval is restarted. When the gap duration timer expires (hence equals D), the service switching point returns to normal operation mode until the service control point sends a new message to start the automatic call gapping mechanism. An example of such an automatic call gapping mechanism is the adaptive automatic call gapping mechanism described in Smith, D.E., "Ensuring Robust Call Throughput and Fairness for SCP Overload Controls", IEEE/ACM Transact. on Networking, Vol. 3, No. 5, Oct. 1995., which does not use a gap duration interval (D) and the value of the gap interval (g) is determined in an adaptive way by the service control point. The calculation of the gap interval is based on the values of one or more measures observed in each measurement period.

The disadvantage of such a system is that regardless of the type of service requests all requests are restricted. So if just one user misuses the network, all other users get penalized.

Another congestion control algorithm is the token bank control algorithm. This is a rate-based control algorithm which is characterized by two parameters: the token bank capacity (C) which is fixed and the token bank rate ($\lambda$) which is controlled by the service control point.
Tokens are generated periodically at the token bank rate ($\lambda$) and stored in a token bank associated with the source of service requests. Tokens that arrive to a full token bank (i.e., containing C tokens) are blocked and lost. If the token bank is not empty, then a service request arriving at the service switching point is sent to the service control point and one token is removed from the token bank. Otherwise, if the token bank is empty, then a service request arriving at the service switching point is dropped (i.e., blocked and lost). It is noted in the literature that, for Poisson traffic, the token bank algorithm operates satisfactorily when the capacity of the token bank (C) is chosen to be >= 10.

This token bank control algorithm has also the disadvantage that when just one user misuses the network, all users will be penalized.

It is therefore an objective of the invention to provide a method for controlling congestion on a network, which alleviates the above mentioned disadvantages.

This objective is achieved by a method according to the invention, which method comprises the steps of:

- measuring the overall utilization of the service control point;
- measuring per source type the source-type-utilization of the service control point;
- on exceeding a predetermined overall utilization of the service control point restricting the service requests of sources of the type for which a predetermined source-type-utilization is exceeded.

When the utilization of service control point is not exceeded, every type of source may send as many service requests as they wish. However, if the utilization of the service control point is exceeded, for every source type the source-type-utilization of the service control point is determined. By breaking down the utilization of the service control point into several source-type-utilizations per source type, it can be determined which source type causes the overloading of the service control point. Service requests for this type of source are then restricted, such that other source types will not be penalized by the mis-use of just one source or source type.

A preferred embodiment comprises the steps of:

- measuring the utilization of the service control point of each source;
- restricting the service requests of the sources of the restricted source-type, which exceed a predetermined individual utilization.

With this embodiment only the sources which are misusing the network are penalized and other sources of the same source type will not be hindered.

The invention also relates to a method for controlling congestion of traffic on a network, wherein the traffic comprises a plurality of service requests from a plurality of sources of different types to a service control point and wherein the network comprises a service switching point for restricting the number of requests, which method comprises the steps of:

- measuring the overall utilization of the service control point;
- measuring per source the source-utilization of the service control point;
- on exceeding a predetermined overall utilization of the service control point restricting the service requests of sources for which a predetermined source-utilization is exceeded.

According to this embodiment the utilization of each source is measured and only the sources are restricted which exceed their predetermined reference utilization. This corresponds to an embodiment according to the invention, in which every source type has just one source, and the service control point utilization by the source-types is measured.

According to a preferred embodiment of the method according to the invention, wherein the network uses an automatic call gapping algorithm for controlling traffic, in which a gap interval is set in which just one service request is transferred by the service switching point to the service control point, the method comprises the steps of:

- providing for each source or source-type a separate source-gap-interval or a separate source-type-gap-interval respectively;
- on exceeding a predetermined utilization of the service control point increasing the source-gap-interval or the source-type-gap-interval respectively of the sources for which a predetermined source-utilization is exceeded or the sources of the type for which a predetermined source-type-utilization is exceeded.

When using the automatic call gapping algorithm for each source or type of source a separate source(-type-) gap-interval is set for each source (type). Depending on the service control point utilization by the source (type) this gap interval is adjusted. So if just one source (type) overloads the service control point, only the source (type) gap interval of this source (type) is increased, such that the service requests of this source (type) are restricted.

According to another preferred embodiment of the invention, wherein the network uses a token bank algorithm for controlling congestion in which a token is used to transfer a service request from the service switching point to the service control point, the method comprises the steps of:

- generating for each source or source type a number of tokens at a source-generation rate or source-type-generation rate respectively;
- on exceeding a predetermined overall utilization of the service control point reducing the source generation rate or source-type-generation rate respectively for the sources for which a predetermined source-utilization is exceeded or for the sources of the type for which a predetermined source-type-utilization is exceeded.

When using the token bank algorithm for every source (type) a separate token bank is present. On overloading the service control point only the source (type) which causes the overloading is restricted by reducing the rate in which tokens are generated for this source (type).

It is apparent that the predetermined utilization or threshold for all sources combined and for every source (type) can be set by for example a network operator. In this way it is possible to dedicate a specific amount of utilization to a specific source (type). The sum of the reference utilizations is the total reference utilization.

In another embodiment of the method according to the invention, the network is an internet protocol based network, an intelligent network, IMT 2000 third generation mobile system and/or an universal mobile telecommunication system network.

The invention also relates to a service switching point for use in a method according to the invention, which service switching point comprises:

- service request receiving means for receiving service requests from sources of different types on a network;
- service request sending means for sending received service requests to a service control point; and
- service request restricting means for restricting the number of service requests from a source or source type sent to the service control point.

Furthermore, the invention relates to a service control point for use in a method according to the invention, which service control point comprises:

- service request receiving means for receiving service requests for sources of different types;
- means for determining the utilization;
- means for determining the source-utilization or source-type-utilization;
- means for requesting to a service switching point restriction of requests of a source or source type.

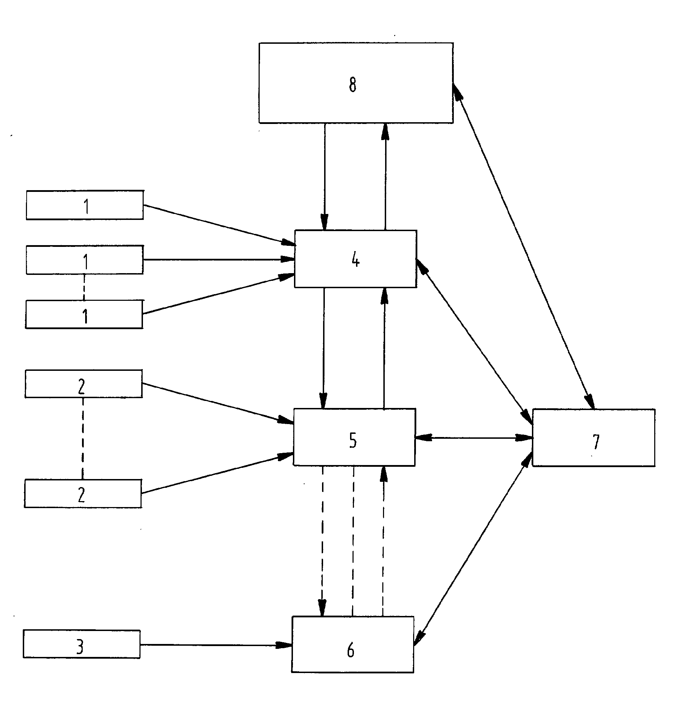

These and other advantages of the invention are elucidated in conjunction with the accompanying drawing.

The drawing shows a diagram of a control system functioning according to a method of the invention. In the diagram a number of sources 1 of a first type, a number of sources of a second type 2 and a number of sources 3 of the i-type are shown. The sources 1,2,3 direct their service requests to service switching points 4,5,6, which are dedicated to one type of source. The incoming service requests are then transferred to the service control point 7. The service control point 7 reports the utilization to a congestion control 8 incorporating an congestion control algorithm, which, when necessary, restricts the number of service requests from one of the service switching points. Note that the functionality of the congestion control algorithm could be distributed and be partly located within the service control point and partly within each service switching point.

In this example, the congestion control is based on automatic call gapping.

Note that real time is divided into successive and equal measurement periods, indexed by the integer t (t=1,2,3,...). In the following equations, many of the defined and/or measured variables are functions of the parameter t.

Suppose there are j-number of types of sources and every type comprises i-number of sources. Then the utilization of the service control point 7 by a source i of type j is defined by equation 1.

$$U_{ij}(t) = \lambda_{ij}(t) \sum_{k=1}^{N_{ij}} E(S_{kij})$$

$$(1)$$

In equation 1 $\lambda_{ij}$ is the rate of service requests generated by source i,j. Each service requests generates $N_{ij}$ messages to be processed by the service control point. $E(Sk_{ij})$ is the mean service time that the service control point needs to process message k of the $N_{ij}$ messages. The utilization of a service control point for type j is defined by equation 2.

$$U_{j}(t) = \sum_{i=1}^{M} U_{ij}(t)$$

$$(2)$$

L is the number of source types and M is the number of sources for the same type.
The overall utilization is defined by equation 3.

$$U_T(t) = \sum_{j=1}^{L} U_j(t)$$

$$(3)$$

When certain sources exceed the preset utilization such sources are defined as non conforming sources. The utilization by non conforming sources is defined by equation 4.

$$Unc_j(t) = \sum_{i=1}^{M} I(U_{ij}(t) > Uref_{ij})U_{ij}(t)$$

$$(4)$$

In this equation 4 the function I is 1 when the utilization exceeds the reference utilization and is zero otherwise.
Subsequently, reduction factors are calculated, with which the gap interval can be adjusted in order to prevent overloading of the service control point. These reduction factors are calculated with equation 5.

$$if \ (U_T(t) \le Uref) \qquad\qquad \texttt{[no congestion]}$$

$$\{r(t) = (Uref - U_T(t)) / U_T(t)$$

$$\texttt{for i = 1, 2, ..., M}$$
$$\texttt{for j = 1, 2, ..., L} \qquad\qquad (5)$$

$$\{r_{ij}(t) = r(t) * (U_{ij}(t)/U_T(t)) / \sum_{m=1}^{M} \sum_{l=1}^{L} (U_{ml}(t)/U_T(t))^2 \}$$

$$\}$$

$$else \ if \ (U_T(t) > Uref) \qquad\qquad \texttt{[no congestion]}$$

$$\{r(t) = (U_T(t) - Uref) / Unc(t)$$

$$for\ i = 1, 2, ..., M$$
$$\texttt{for j = 1, 2, ..., L}$$

$$\{if \ (U_{ij}(t) > Uref_{ij}) \qquad\qquad \texttt{[non-conforming sources]}$$

$$\{r_{ij}(t) = r(t) * (U_{ij}(t)/Und(t)) / \sum_{m=1}^{M}\sum_{l=1}^{L} I(U_{ml}(t) > Uref_{ml})(U_{ml}(t)/Und(t))^2 \}$$

```
                    }
                    }
```

Then the gap interval for each source can be determined with equation 6.
for i = 1, 2, ....M

for j = 1, 2, ....L                                                                              (6)

```
        {
```

$$ETin_{ij}(t+1) = MTout_{ij}(t) - g_{ij}(t) ;$$

$$gref_{ij}(t+1) = MAX(0, (\frac{1}{\lambda ref_{ij}} - ETin_{ij}(t+1)))$$

```
        }
```

$$\text{if } (U_T(t) \le Uref \,) \qquad\qquad \text{[no congestion]}$$

```
    {
        for i = 1, 2, …, M
        for j = 1, 2, …, L
```

$$\{ETdes_{ij}(t+1) = \frac{Uref_{ij}}{\lambda ref_{ij}} * \frac{1}{U_{ij}(t)} * \frac{1}{(1+r_{ij}(t))};$$

$$gdes_{ij}(t+1) = ETdes_{ij}(t+1) - ETin_{ij}(t+1);$$

$$g_{ij}(t+1) = MAX(0, MIN(gref_{ij}(t+1), gdes_{ij}(t+1)))$$

```
        }
    }
```

```
else if (U_T(t) > Uref)                    [congestion]

    {
                for i = 1, 2, ..., M
                for j = 1, 2, ..., L

                { if (U_ij(t) > Uref_ij) [non-conforming sources]
```

$$\{ ETdes_{ij}(t+1) = \frac{Uref_{ij}}{\lambda ref_{ij}} * \frac{1}{U_{ij}(t)} * \frac{1}{(1-r_{ij}(t))};$$

$$gdes_{ij}(t+1) = ETdes_{ij}(t+1) - ETin_{ij}(t+1);$$

$$g_{ij}(t+1) = MAX(0, MIN(gref_{ij}(t+1), gdes_{ij}(t+1)))$$

```
                }
```

```
            else if (U_ij(t) ≤ Uref_ij)        [conforming sources]
```

$$\{ g_{ij}(t+1) = MAX(0, gref_{ij}(t+1)) \}$$

```
        }

    }
```

In equation 6 gref$_{ij}$ (t) is the maximum gap interval, which is required to sustain the utilization of a service control point at Uref$_j$. ETdes$_{ij}$ (t) is the desired mean time between requests which are transferred from the service switching point to the service control point. gdes$_{ij}$ (t) is the desired gap interval corresponding to ETdes$_{ij}$ (t).

An algorithm according to the invention based on the automatic call gapping algorithm and as explained above, could be called an enhanced adaptive automatic call gapping algorithm.

A similar approach can be used for the token bank algoritm. In this algoritm, $\lambda$ is the rate in which tokens are generated and C is the capacity of a token bank.

First the reference $\lambda$ref is calculated by equation 7.

$$( \lambda ref_{ij}(t) = \frac{Uref_{ij}(t)}{\sum_{k=1}^{N_{ij}} E(S_{kij})} )$$    (7)

The capacity for a token bank could then be defined by equation 8, in which T is the length of the measurement interval.

$$C_{ij} = MAX\,(30,(T * \lambda\,ref_{\,ij} *0.2)) \tag{8}$$

The rates $\lambda_{ij}$ for each token bank can then be calculated with equation 9.

$$\text{if } (U_{\,T}(t) \le Uref\,) \qquad \texttt{[no congestion]}$$

$$\{$$

$$\texttt{for i = 1, 2, ..., M}$$

$$\texttt{for j = 1, 2, ..., L}$$

$$\{\lambda_{\,ij}(t+1) = MAX\,(\lambda\,ref_{\,ij},(1+r_{ij}(t)) * \lambda_{\,ij}(t))\}$$

$$\}$$

$$\texttt{else if } (U_{\,T}(t) > Uref\,) \qquad \texttt{[congestion]}$$

$$\{$$

$$\texttt{for i = 1, 2, ....M}$$

$$\texttt{for j = 1, 2, ....L} \tag{9}$$

$$\{ \texttt{ if } (U_{\,ij}(t) > Uref_{\,\,ij}) \texttt{ [non-conforming}$$

$$\texttt{sources]}$$

$$\{\lambda_{\,ij}(t+1) = MAX\,(\lambda\,ref_{\,ij},(1-r_{ij}(t)) * \lambda_{\,ij}(t))\}$$

$$\texttt{else if } (U_{\,ij}(t) \le Uref_{\,\,ij}) \texttt{ [conforming sources]}$$

$$\{\lambda_{\,ij}(t+1) = \lambda\,ref_{\,ij}\}$$

$$\}$$

$$\}$$

An algorithm according to the invention based on the token bank algorithm and as explained above, could be called an enhanced adaptive token bank algorithm.

By using this method according to the invention several characteristics can be recognized. These are:

- The overload situation in the service control point is triggered when the service control point utilization exceeds a predefined threshold; this contributes to the responsiveness and the robustness of the algorithms;
- The congestion control functionality in the service control point is capable of measuring (observing) the service control point utilization due to each individual source connected to a service switching point; the sum of which is the overall service control point utilization; this relates to the fairness and the robustness of the algorithms;

- The network operator may specify a service control point utilization bound (threshold) for each source or source type; this relates to the fairness and the robustness of the algorithms;
- The reduction factor r is not constant but depends on the source parameters and the actual traffic. In this way, we can obtain higher reductions at sources that demand higher processing capacity from the service control point. Furthermore, the algorithms perform reductions only to sources that require more capacity than their pre-specified (by the operator) utilization bound; this contributes to the fairness of the algorithms;
- If the service control point is under-utilised (congestion situation is not triggered), then some sources may use more service control point capacity than their respective utilization bounds, thus achieving higher overall service control point utilization; this contributes to the robustness/efficiency of the algorithms;
- In comparison to the adaptive automatic call gapping algorithm, they are simpler to implement, since the enhanced adaptive algorithms do not require the introduction or the use of congestion levels;
- Load balancing functionality can be easily added by re-directing call requests that are rejected by a congested service control point to another non-congested service control point. Load balancing is typically used to balance the load in a communication network by distributing the arriving requests among different network entities by using some predefined criteria (e.g., utilization bounds). Load balancing can be combined with any congestion control algorithm and applied in an intelligent network architecture. In case of a service control point overload condition the congestion control algorithm is activated; which will lead to call request refusals. Load balancing can be used to redirect the refused call requests to one or more service control points that have spare capacity. The redirection of these refused call requests among the different service control points can, for example, be accomplished on a round robin basis; this contributes to the robustness/efficiency and added value of the algorithms.

**Claims**

1. Method for controlling congestion of traffic on a network, wherein the traffic comprises a plurality of service requests from a plurality of sources of different types to a service control point and wherein the network comprises a service switching point for restricting the number of requests, which method comprises the steps of:

   - measuring the overall utilization of the service control point;
   - measuring per source type the source-type-utilization of the service control point;
   - on exceeding a predetermined overall utilization of the service control point restricting the service requests of sources of the type for which a predetermined source-type-utilization is exceeded.

2. Method according to claim 1, comprising the steps of:

   - measuring the utilization of the service control point of each source;
   - restricting the service requests of the sources of the restricted source-type, which exceed a predetermined individual utilization.

3. Method for controlling congestion of traffic on a network, wherein the traffic comprises a plurality of service requests from a plurality of sources of different types to a service control point and wherein the network comprises a service switching point for restricting the number of requests, which method comprises the steps of:

   - measuring the overall utilization of the service control point;
   - measuring per source the source-utilization of the service control point;
   - on exceeding a predetermined overall utilization of the service control point restricting the service requests of sources for which a predetermined source-utilization is exceeded.

4. Method according to any of the claims 1 - 3, wherein the network uses an enhanced adaptive automatic call gapping algorithm for controlling congestion, in which a gap interval is set in which just one service request is transferred by the service switching point to the service control point, comprising the steps of:

   - providing for each source or source type a separate source-gap-interval or a separate source-type-gap-interval respectively;
   - on exceeding a predetermined utilization of the service control point increasing the source-gap-interval or the source-type-gap-interval respectively of the sources for which a predetermined source-utilization is exceeded or the sources of the type for which a predetermined source-type-utilization is exceeded.

5. Method according any of the claims 1-3, wherein the network uses a enhanced adaptive token bank algorithm for controlling congestion in which a token is used to transfer a service request from the service switching point to the service control point, comprising the steps of:

   - generating for each source or source type a number of tokens at a source-generation-rate or source-type-generation rate respectively;
   - on exceeding a predetermined utilization of the service control point reducing the source-generation-rate or source-type-generation rate respectively for the sources for which a predetermined source-utilization is exceeded or the sources of the type for which a predetermined source-type-utilization is exceeded.

6. Method according to any of the preceding claims, wherein the network is an internet protocol based network, an intelligent network IMT 2000 third generation mobile system, and/or an universal mobile telecommunication system network.

7. Service switching point for use in a method according to any of the preceding claims, comprising:

   - service request receiving means for receiving service requests from sources of different types on a network;
   - service request sending means for sending received service requests to a service control point; and
   - service request restricting means for restricting the number service request of a source or a source type sent to the service control point.

8. Service control point for use in a method according to any of the claims 1-6, comprising:

   - service request receiving means for receiving service requests for sources of different types;
   - means for determining the utilization;
   - means for determining the source-utilization or the source-type-utilization;
   - means for requesting to a service switching point restriction of requests of a source or source type respectively.

**European Patent Office**

# EUROPEAN SEARCH REPORT

Application Number

EP 02 07 7180

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 878 224 A (SMITH DONALD EDWARD) 2 March 1999 (1999-03-02) | 1-3,7 | H04L12/56 H04L12/24 H04Q3/00 |
| A | * abstract * * claims 1,4 * * column 1, line 17-34 * * column 4, line 15-39 * * column 10, line 33 - column 13, line 30 * | 4-6 | |
| Y | WO 97 45792 A (BELL COMMUNICATIONS RES) 4 December 1997 (1997-12-04) | 1-4,7 | |
| A | * abstract * * figure 3 * * claims 3,5-7 * * page 1, line 7-19 * * page 5, line 27 - page 6, line 7 * * page 12, line 16 - page 20, line 20 * | 5,6 | |
| Y | US 5 491 801 A (CHIU DAH-MING ET AL) 13 February 1996 (1996-02-13) | 1-4,7 | |
| A | * abstract * * claims 1-3 * * column 9, line 20 - column 11, line 7 * | 5,6 | TECHNICAL FIELDS SEARCHED (Int.Cl.7) H04L H04Q |
| A | OUELLETTE M ET AL: "Performance evaluation of a multiprocessor SCP" INTELLIGENT NETWORK WORKSHOP, 1997. IN '97., IEEE MAY 4-7, 1997, NEW YORK, NY, USA,IEEE, US, 4 May 1997 (1997-05-04), page 16pp XP010226787 ISBN: 0-7803-4129-5 * the whole document * | 1-7 | |

The present search report has been drawn up for all claims

| Place of search | Date of completion of the search | Examiner |
|---|---|---|
| THE HAGUE | 25 November 2002 | Cichra, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 07 7180

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2002

| Patent document cited in search report | | Publication date | Patent family member(s) | | Publication date |
|---|---|---|---|---|---|
| US 5878224 | A | 02-03-1999 | CA | 2252792 A1 | 04-12-1997 |
| | | | EP | 0901656 A1 | 17-03-1999 |
| | | | JP | 11514177 T | 30-11-1999 |
| | | | WO | 9745792 A1 | 04-12-1997 |
| WO 9745792 | A | 04-12-1997 | CA | 2252792 A1 | 04-12-1997 |
| | | | EP | 0901656 A1 | 17-03-1999 |
| | | | JP | 11514177 T | 30-11-1999 |
| | | | WO | 9745792 A1 | 04-12-1997 |
| | | | US | 5878224 A | 02-03-1999 |
| US 5491801 | A | 13-02-1996 | US | 5377327 A | 27-12-1994 |
| | | | US | 5675742 A | 07-10-1997 |
| | | | US | 5668951 A | 16-09-1997 |

EPO FORM P0459

For more details about this annex : see Official Journal of the European Patent Office, No. 12/82